# EUROPEAN PATENT SPECIFICATION

(11) **EP 2 323 275 B1**
(45) Date of publication and mention of the grant of the patent: **02.12.2015**
(21) Application number: 08800576.4
(22) Date of filing: 05.09.2008
(51) Int. Cl.: H04B 7/02, H04L 25/02, H04L 5/00

(54) **METHOD AND DEVICE FOR UPLINK SIGNALS TRANSMISSION IN WIRELESS ACCESS NETWORK**
VERFAHREN UND EINRICHTUNG ZUR ÜBERTRAGUNG VON AUFWÄRTSSTRECKENSIGNALEN IN EINEM DRAHTLOSEN ZUGANGSNETZ
PROCÉDÉ ET DISPOSITIF DE TRANSMISSION DE SIGNAUX EN LIAISON MONTANTE DANS UN RÉSEAU D'ACCÈS SANS FIL

(43) Date of publication of application: 18.05.2011
(73) Proprietor: ALCATEL LUCENT, 92100 Boulogne-Billancourt (FR)
(72) Inventor: ZHU, Xiaolong, Shanghai 201206 (CN); SONG, Yang, Shanghai 201206 (CN)
(74) Representative: Wetzel, Emmanuelle
(86) International application number: PCT/CN2008/001580
(87) International publication number: WO 2010/025587

(56) References cited:
- EP-A2- 0 831 627
- WO-A1-2007/125889
- WO-A2-2007/084988
- CN-A- 101 019 340
- CN-A- 101 027 863
- CN-A- 101 039 136
- US-A1- 2007 253 324
- CIMINI L J JR ET AL: "Clustered OFDM with transmitter diversity and coding", GLOBAL TELECOMMUNICATIONS CONFERENCE, 1996. GLOBECOM '96. 'COMMUNICATI ONS: THE KEY TO GLOBAL PROSPERITY LONDON, UK 18-22 NOV. 1996, NEW YORK, NY, USA,IEEE, US, vol. 1, 18 November 1996 (1996-11-18), pages 703-707, XP010220443, DOI: 10.1109/GLOCOM.1996.594452 ISBN: 978-0-7803-3336-9

## Description

### FIELD OF THE INVENTION

The present invention relates to a multi-carrier based wireless access network, in particular relates to the uplink data transmission and the processing of the uplink communication in a multi-carrier based wireless access network.

### BACKGROUND OF THE INVENTION

### Multi-User Multiple-Input Multiple-Output (MU-MIMO)

The uplink of the MU-MIMO is typically referred to as Multiple Access Channel (MAC), and the downlink is referred to as Broadcast Channel (BC). In the uplink, all mobile terminals work at the same frequency band and transmit signals to the base station simultaneously, and then the base station distinguishes user data in a proper manner. The base station needs to separate data of each user by using array processing, multi-user detection or other effective manner aiming at different access manners. In the downlink, the base station performs serial-parallel conversion to the processed data so as to generate a plurality of data streams, each of which is pulse-shaped and modulated, and then transmitted to the wireless space via a plurality of antennas. Each receiving antenna receives an aggregation of the signals transmitted to all the communication users by the base station and interference and noise, wherein, the Multi-Address Interference (MAI) introduced thereby should be eliminated. In this disclosure, there is no intention to distinguish the concepts of "user" and "mobile terminal".

Due to the independency of each user channel in the MU-MIMO system, the user can get to know about its own channel state information, but can hardly obtain the channel state information of the other users, and the obtaining of the channel state information of the other users requires great cost. That is to say, it is hard to conduct cooperation between users. On the contrary, the base station is qualified to obtain the channel state information of all the communication users. For the Time Division Duplex (TDD) system, it could be obtained by the training or pilot sequence of the uplink received by the base station. For the Frequency Division Duplex (FDD) system, it could be obtained through the feedback. Besides, the processing ability of the base station is stronger than that of the Mobile Terminal (MS), thus the preprocessing of the signal (e.g. beamforming) is done before the base station transmits the signal, so as to eliminate and inhibit the interference, or the base station performs postprocessing to distinguish the users after the signals are received.

Since the Multi-User MIMO system uses the same frequency band, other multiple access methods except Frequency Division Multiple Access (FDMA) may be applied. Wherein, the spectrum effectiveness of the Time Division Multiple Access (TDMA) is relatively low, while numerous code resources are required for Code Division Multiple Access (CDMA). However, Space Division Multiple Access (SDMA) doesn't have these two disadvantages. In the mean time, multi-antennas of the Multi-User MIMO can also satisfy the requirement for the space dimension in the Space Division Multiple Access, therefore, Space Division Multiple Access (SDMA) becomes an important multiple access method in the Multi-User MIMO system.

Multi-User MIMO has many advantages, e.g. enlarging the system throughput by using multiplexing gain of the multi-antennas, enhancing the system performance by using diversity gain of the multi-antennas, distinguishing the users by using the directivity gain of the antenna, so as to eliminate the interference between users, etc. Of course, if combined with the realization problem of the practical application, the complexity of the algorithm should also be considered, thus a compromise between the performance and the complexity needs to be found. It could be said so, that the complexity is the price for the numerous advantages introduced by the Multi-User MIMO technology.

### Virtual MIMO based on Collaborative diversity implemented by multiple single antenna mobile terminals (VMIMO)

The spacing between adjacent antennas required by the ideal MIMO multi-antenna system is far greater than the wavelength of the electric wave, and the transmission channel between a plurality of transceive antennas are un-correlated. However, it has always been difficult for the user terminal to implement the settlement of the multiple antennas, and it is unrealistic to satisfy the ideal requirements mentioned above, due to the limitation of the mass, volume and power consumption. Thus Sendonaris etc. proposed a new space diversity technique, Collaborative diversity, the basic principle of which is: a user terminal transmits the information received from its partner (another mobile terminal) besides its own information to the base station. In the mean time, part of the information of its partner is received by the mobile terminal and forward to the base station. Thus, two independent fading paths are generated between the two mobile terminals and the base station respectively, and therefore the spatial diversity gain is obtained in the way of imitating the traditional multi-transmitting antenna diversity. The base station may confront the multi-user interference effectively by joint detection technique of interference cancellation, maximum likelihood criterion (ML) etc. for the uplink signals transmitted over different paths.

### Virtual MIMO based on Collaborative Spatial Multiplexing implemented by multiple single antenna mobile terminals

It is proposed in the protocol version 1.0 of the mobile WiMAX system configuration based on IEEE802.16e standard, that a virtual MIMO technique which is referred to as Collaborative Spatial Multiplexing is implemented, by matching two mobile terminals having single transmitting antenna. Wherein, the two mobile terminals communicate with the same base station in the same time-frequency resource, each mobile terminal only transmits its own traffic data, while each user terminal transmits its own pilot data using one of the two orthogonal pilot patterns, so that the base station can properly estimate the two uplink channels from the two mobile terminals, and then retrieve the uplink traffic data corresponding to the two mobile terminals using spatial multiplexing decoder such as minimum mean square error (MMSE) decoder or maximum likelihood decoder.

For more details of the content of the protocol version 1.0 of Mobile WiMAX system configuration, please see WiMAX Forum™ Mobile System Profile Release 1.0 Approved Specification (Revision 1.4.0: 2007-05-02).

### Virtual MIMO implemented by using at least one multi-antenna mobile terminal

In the protocol version 1.5 of the mobile WiMAX system configuration based on IEEE 802.16e standard and the developing IEEE 802.16m standard specification, it is possible to configure a plurality of transmitting antennas for one mobile terminal, even though the spacing between the antennas can not achieve the various requirements of the ideal status temporally.

Virtual MIMO implemented by using at least one multi-antenna mobile terminal has the following three forms, each mobile terminal has two transmitting antennas without loss of generality, and the virtual MIMO is implemented by matching two mobile terminals.
(a) Each mobile terminal works under Single-Input Multiple-Output (SIMO) mode, or each mobile terminal transmits the same data via the two transmitting antennas thereof, or one mobile terminal works under SIMO mode, while the other mobile terminal transmits the same data via its two transmitting antennas.
   Advantages: Only two orthogonal pilot patterns are needed.
   Disadvantages: The spatial diversity gain of the multi-antennas is not fully utilized, and when one of the mobile terminals uses only one transmitting antenna, the power gain of the silent antenna will be wasted, the transmitting power averaged to each subcarrier is not high.
(b) One mobile terminal works under SIMO mode or transmits the same data via its two transmitting antennas, and the other mobile terminal works under MIMO mode, such as Space Time Transmit Diversity (STTD) or Spatial Multiplexing (SM).
   Advantages: The mobile terminal working under MIMO mode fully utilizes the spatial diversity gain and power gain of its multi-antenna. And, if space-time coding scheme like STTD etc. is used, the robustness of the system could be improved; while if it is implemented that, two independent data streams are transmitted using SM via the two antennas of one mobile terminal, the data throughput of the system could be increased.
   Disadvantages: The mobile terminal working under SIMO mode or transmitting the same data via its two transmitting antennas doesn't fully utilize the spatial diversity gain and/or power gain of its multi-antenna. Since the two transmitting antennas of the mobile terminal using STTD or SM require to use pilot patterns orthogonal to each other, the two user terminals requires three orthogonal pilot patterns. Thus the pilot signals occupy more resources i.e. subcarrier + time slot. Channel estimation and the corresponding traffic data decode are to be carried out based on the pilot signals in the three orthogonal pilot patterns, thus the receiver is more complicated than that of the protocol version 1.0 of the mobile WiMAX system configuration.
(c) Both mobile terminals work under MIMO mode, such as STTD or SM.
   Advantages: Two user terminals can both fully utilize the transmitting antennas thereof, high power gain and diversity gain could be achieved.
   Disadvantages: Four pilot patterns orthogonal to each other being used, the pilot signals occupy more resources. Channel estimation and the corresponding traffic data decode are to be carried out based on the pilot signals in the four orthogonal pilot patterns, thus the receiver is much more complicated than that of the protocol version 1.0 of the mobile WiMAX system configuration.

By now, WiMAX and IEEE 802.16m standardization organization are discussing about the above (b) and (c). There are four detailed implementation manners for the situation in (a):

### 1. Basic VMIMO

Each mobile terminal uses one transmitting antenna to transmit uplink signal. It belongs to open-loop scheme and the base station doesn't need to transmit any indicating information related to the configuration of the transmitting antenna to the mobile terminal.

### 2. VMIMO assisted by Spatially uncoded transmit diversity (SUTD)

The two transmitting antennas of each mobile terminal transmit the same uplink signal. It belongs to open-loop scheme, and the base station doesn't need to transmit any indicating information related to the configuration of the transmitting antenna to the mobile terminal.

### 3. VMIMO assisted by Time Switched Transmit Diversity (TSTD)

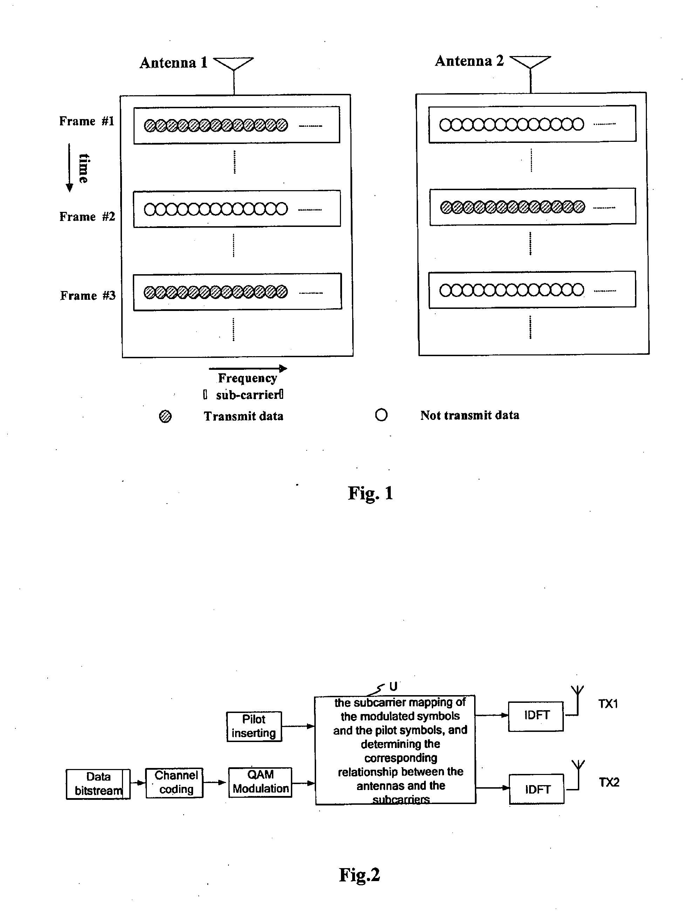

Each mobile terminal uses its two configured transmitting antenna alternatively in time dimension, for example, one mobile terminal uses the first transmitting antenna to transmit the frame of odd number, and uses the second transmitting antenna to transmit the frame of even number, while another mobile terminal uses the first transmitting antenna to transmit the frame of even number, and uses the second transmitting antenna to transmit the frame of odd number, as shown in Fig.1. Since the frames are continuous transmit elements in time domain, one mobile terminal uses only one transmitting antenna in each frame size, thus this scheme is also open-looped.

4. Similar to manner 3, the mobile terminal's selection of antenna is not simple periodical alternation, but selecting the one with better signal quality. Thus it is closed-loop scheme. The detailed selection of antenna is based on the information from the base station for indicating the quality of the uplink signal or based on the Channel Reciprocity under time division duplex mode.

The former three implementation manners for the situation (a) could not implement the diversity gain of the multi-antennas. This defect will be further described below in connection with simulation diagram. Furthermore, besides the implementation manner 2, the mobile terminal in other manner keeps one of its transmitting antennas silent, so that the power gain is impaired.

WO 2007/084988 A2 discloses techniques for multiplexing pilots in a wireless transmission.

CIMINI L J JR ET AL: "Clustered OFDM with transmitter diversity and coding", GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA, IEEE, US, vol.l, 18 November 1996 (1996-11-18), pages 703-707, XP010220443, DOl: 1 0.11 09/GLOCOM.1996.594452 ISBN: 978-0-7803-3336-9 discloses clustered OFDM with transmitter diversity and coding.

EP 0 831 627 A2 discloses a high-speed wireless transmission system which is employable in a macro-cellular environment.

WO 2006/014143 A1 discloses a method for transmitting a digital signal, wherein the digital signal is to be transmitted by a plurality of antennas and a 2-domain pre-transformation is carried out.

### SUMMARY OF THE INVENTION

In the light of the problems existing in the prior art mentioned above, the present invention is intended to provide a new method and apparatus for uplink signal transmission in the multi-carrier based multi-antenna network device having a plurality of transmitting antennas, such as mobile terminal, and a corresponding method and apparatus for channel estimation in the uplink counterpart device of the network device such as base station. The above scheme can fully utilize the frequency diversity introduced by the plurality of transmitting antennas.

This invention is also intended to provide the above mentioned method and apparatus, which can guarantee a relatively high antenna power gain.

This invention is also intended to provide the above mentioned method and apparatus, which can save as much time-frequency resource cost caused by the pilot signal as possible.

For the above intention, according to the invention, a method is provided according to claim 1 and an apparatus according to claim 7.

With the method and apparatus provided in this invention, the frequency diversity introduced by multi-antennas can be effectively utilized, and a relatively high antenna power gain can be guaranteed, furthermore, preferably, the invention can save the time-frequency resource cost caused by the pilot signal as much as possible, namely can use as few orthogonal pilot patterns as possible.

### BRIEF DESCRIPTION OF THE DRAWINGS

By reading the detailed description of the non-constricting embodiments with reference to the following drawings, the other features, objects and advantages of this invention will become apparent.
Fig. 1 shows a schematic view of the VMIMO assisted by Time Switched Transmit Diversity (TSTD) in the prior art;
Fig. 2 shows a sketch of the physical layer of an OFDM transmitter according to one embodiment of the invention;
Fig. 3a shows a schematic view of two mobile terminals according to one embodiment of the invention;
Fig. 4 shows a flow chart of the method according to one preferable embodiment of the invention;
Fig. 5 shows a block diagram of a first transmitting device in a network device of a multi-carrier based wireless access network, for transmitting uplink data to access device side, according to one embodiment of the invention;
Fig. 6 shows a block diagram of a channel estimation device in an uplink counterpart device of a network device of a wireless access network, according to one embodiment of the invention;
Fig. 7a and Fig. 7b show a comparison between the simulation results of the present invention and the prior art.

In the drawings, same or similar reference numerals refer to the same or similar components.

### DETAILED DESCRIPTION OF EMBODIMENTS

Fig. 2 shows a sketch of the physical layer of a transmitter according to one embodiment of the invention. Since only the uplink signal transmission is discussed in the present invention, the transmitter is mainly located in the various network devices needing to transmit uplink signal in a wireless manner in the access network, such as mobile terminal, relay station, etc. Of course, with the development of the wireless transmission technology, if the base station needs to transmit uplink wireless signal in the near further, the transmitter shown in the figure may also be used in the base station. In the following, without loss of generality, the present invention will be described using the uplink communication between the mobile terminal and the base station as example.

It should be understood by those skilled in the art, some modules that should be included in the Orthogonal Frequency Division Multiplexing (OFDM) transmitter, such as module for inserting Cyclic Prefix (CP), are omitted in Fig. 2 for the sake of conciseness. And it should also be understood by those skilled in the art, such omission will not influence the realization of the present invention, because these modules have no substantial connection with the technical solution of the invention described in the following. And, although OFDM is used as an example in the following, the scope of the invention is defined by the appended claims, and the technical solution thereof may be applied in various multi-carrier based wireless communication systems.

One of the core concepts of the invention is that, at least two transmitting antennas of the mobile terminal which has a plurality of transmitting antennas use different subcarrier sets but share the same pilot pattern. Therefore, the functions implemented by module U comprises mapping the pilot symbol and the QAM modulated data symbol to a plurality of subcarriers, while the corresponding relationship between these subcarriers and the transmitting antennas could be determined before the subcarrier modulation, or instantly determined after the subcarrier modulation. In the following, without loss of generality, the situation of the predetermination of the corresponding relationship between the subcarriers and the transmitting antennas is taken as an example.

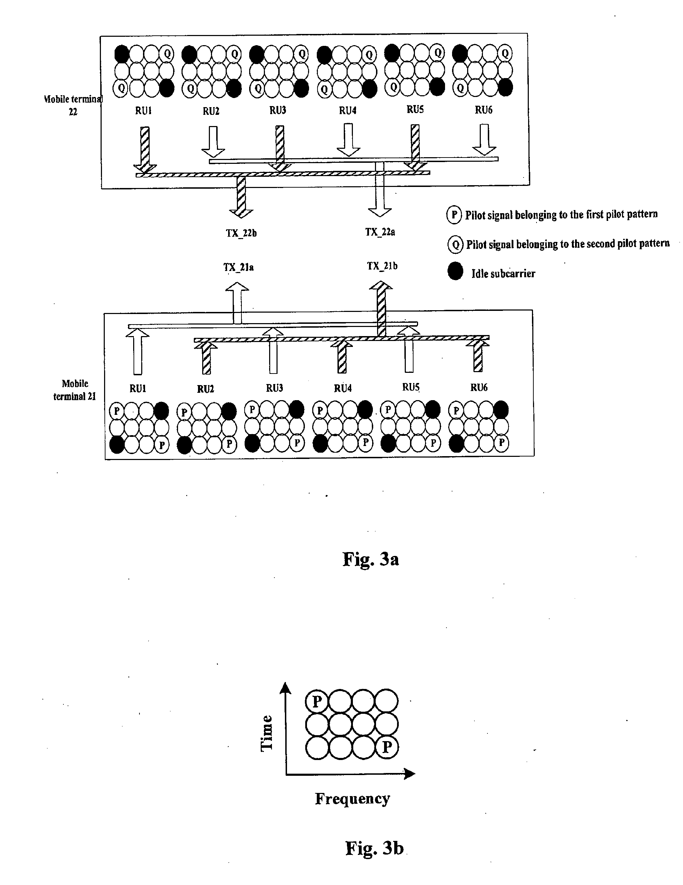

Referring to Fig. 3a in connection with Fig. 3b, Fig. 3a shows two mobile terminals 21 and 22. The mobile terminal 21 has two transmitting antennas TX_21a and TX_21b, and uses a first pilot pattern. The mobile terminal 22 has two transmitting antennas TX_22a and TX_22b, and uses a second pilot pattern. Taking the mobile terminal 21 side for example, the adjacent six Resource Units are corresponding to TX_21a and TX_21b respectively. The detailed corresponding relationship is that, RU1, RU3 and RU5 are corresponding to TX_21a, and RU2, RU4 and RU6 are corresponding to TX_21b. It can be seen in Fig. 3b, a Resource Unit is a resource block formed by a plurality of subcarriers and a plurality of OFDM symbols. For the uplink of OFDM system, a Resource Unit is typically the smallest unit of the channel estimation, thus Fig. 3a shows a preferred embodiment.

It should be understood by those skilled in the art, only 24 subcarriers are shown in Fig. 3a for the sake of convenience. Although it is far less than the number of the subcarriers in the practical OFDM system, such as 1024, this has no influence on an integral and clear description of the substance of the present invention. Based on the statement above, the structure formed by 3 OFDM symbols and 24 subcarriers could be seen as one OFDM frame, wherein each row may be seen as one OFDM symbol.

It should also be understood by those skilled in the art, Fig. 3a only shows one specific embodiment of the present invention. In fact, the corresponding relationship between each resource unit and the transmitting antenna may vary flexibly, for example, RU1-RU3 may be transmitted over TX_21a, and RU4-RU6 may be transmitted over TX_21b; or RU1, RU2, RU5, RU6 are transmitted over TX_21a, and RU3, RU4 are transmitted over TX_21b. In a word, one transmitting antenna of one mobile terminal transmits signals by using a part of the subcarriers available at the mobile terminal.

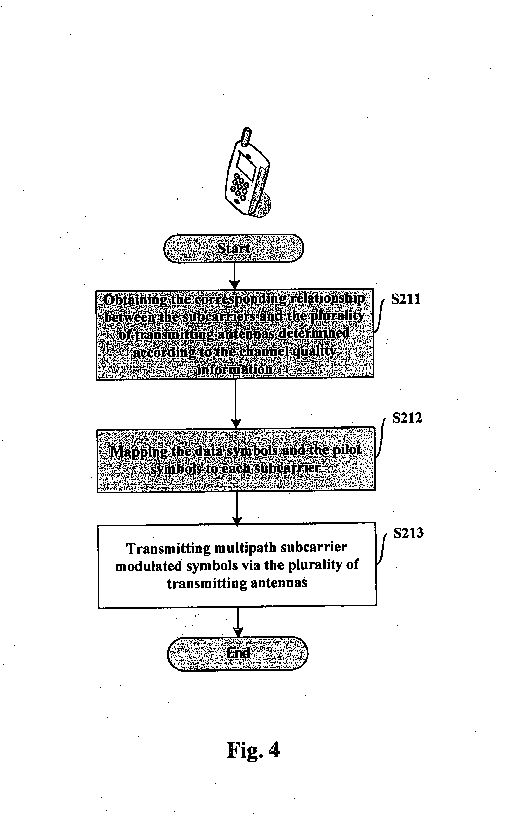

Fig. 4. shows a flow chart of the method according to one preferable embodiment of the invention. As stated above, the sequence relationship between steps is merely a non-constricting embodiment of the present invention, especially step S212 and S213 which have no sequence therebetween.

According to the preferable embodiment, in step S211, the mobile terminal obtains a corresponding relationship between a plurality of transmitting antennas and the subcarriers determined according to the channel quality information. Step S211 may be implemented by some sub-steps. For example, in the Time Division Duplex (TDD) mode, the receiving channel quality and the transmitting channel quality are the same within the channel related time, because the receiving and transmitting are of the same frequency but of different time. Therefore, the mobile terminal 21 may obtain the quality related information of the uplink signal received by the base station and transmitted by the mobile terminal 21 using each RU, according to the downlink channel quality related information received at each RU. The corresponding relationship between its subcarriers and the plurality of transmitting antennas is therefore determined. For example, the base station may indicate the quality related information of the uplink signal previous received form each RU of the mobile terminal 21 to the mobile terminal 21, and then the mobile terminal 21 determines the corresponding relationship between its subcarriers and the plurality of transmitting antennas according to the indication information received from the base station. For example, if the mobile terminal 21 uses the corresponding relationship of its subcarriers and the plurality of transmitting antennas shown in Fig. 3a, and the uplink signal quality related information from the base station indicates that, the quality of the signal transmitted over TX_21a is a few dB higher than that of the signal transmitted over TX_21b, the mobile terminal 21 adjusts the distribution of the plurality of subcarriers on the two transmitting antennas. For example, the ratio of 1:1 (two antennas go halves in the total subcarrier) shown in Fig. 3a is adjusted to 2:1 or even higher. Optionally, the mobile terminal may also prestore a plurality of information indicating the different corresponding relationships between the subcarriers and the transmitting antennas, and properly selects therefrom according to the uplink signal quality related information.

According to a variant of the situation above, the base station instead of the mobile terminal 21 may determine the corresponding relationship between the subcarriers and the transmitting antennas TX_21a and TX_21b in the following time period, thus, the information transmitted to the mobile terminal 21 by the base station is the specific corresponding relationship between each subcarrier and the corresponding transmitting antenna; or the number of the available subcarriers on each antenna, while the mobile terminal 21 may determine on its own which antenna use which subcarrier.

In this example, it can be seen that there are differences between the execution cycles of step S211 and its subsequent step shown in Fig. 4. If there is more uplink data, the step S212 and S213 are actually performed constantly, while the step S211 is performed preferably at a determined period. It should be understood by those skilled in the art, if the period is too long, the system may be unable to timely response to the sudden degradation of the channel etc., which leads to mass of data being transmitted over antenna with extremely bad channel conditions, therefore the base station is unable to receive properly. Likely, if the period is too short, the requirement to the processing ability of the mobile terminal is too high, which may therefore result in the increment of the feedback as it is preferably carried out based on the uplink signal quality related information.

It should be understood by those skilled in the art, the corresponding relationship between each subcarrier and the transmitting antennas may be statically configured, for example, subcarriers No. 0-5, No. 12-17 may be statically corresponding to TX_21a, while subcarriers No. 6-11, No. 18-23 may be statically corresponding to TX_21b. Thus, step S211 may be omitted. Furthermore, the mobile terminal 21 may also prestore a plurality of information indicating the different corresponding relationships between the subcarriers and the transmitting antennas, and periodically switch the used corresponding relationship, in this case, step S211 may also be omitted.

In step S212, the QAM modulated data symbols, the pilot symbols generated by the pilot symbol generator are together modulated with the subcarrier, therefore the multi-path subcarrier modulated symbols are obtained. Wherein, since certain subcarrier is corresponding to certain specific transmitting antenna, date symbols or pilot symbols modulated by certain subcarrier are queued on the corresponding transmitting antenna. Thus, two paths of subcarrier modulated symbols are generated.

In step S213, the two paths of subcarrier modulated symbols obtained in step S212 are transmitted to the base station over the corresponding transmitting antenna.

As shown in Fig. 3a, except for the idle subcarriers, each RU may carry 10 data symbols or pilot symbols, and in the above embodiment, the data symbols carried by the shown six RUs are different from each other. According to a variant of the embodiment, wherein, the data rate is half of that in the previous embodiment, namely, the data symbols carried by RU1 and RU2, by RU3 and RU4, by RU5 and RU6 are respectively the same, the remaining general data symbols are buffered temporarily for later transmission. Thus, same data symbols are transmitted over the two transmitting antennas of the mobile terminal 21, with the subcarrier used being different. Extra frequency diversity may be introduced, of course, the price of which is the decrease of data rate.

The procedure in the mobile terminal 22 shares the same principle with the mobile terminal 21, thus, no more details will be given here. However, preferably, the first pilot pattern used by the mobile terminal 21 is different from the second pilot pattern used by the mobile terminal 22. More preferably, the first pilot pattern and the second pilot pattern are orthogonal to each other.

In the present invention, preferably, each transmitting antenna transmits using full power. Thus, in comparison with the prior art shown in Fig. 1, the antenna transmitting power averaged to each subcarrier is higher, thus the advantage of transmitting power gain is obvious.

According to a different embodiment of the invention, under the permission of the conditions such as the equipment size etc., the mobile terminal may have more than two transmitting antennas, for example, four or even eight. Then, the implementation manner of the present invention is more flexible, for example, if one OFDM symbol comprises 8 RUs, while the mobile terminal has 4 antennas, then the first and the fifth RUs may be transmitted over the first transmitting antenna, and the second and the sixth RUs may be transmitted over the second transmitting antenna, and the third and the seventh RUs may be transmitted over the third transmitting antenna, and the fourth and the eighth RUs may be transmitted over the fourth transmitting antenna, and the base station may have only one pilot pattern assigned to the mobile terminal. Alternatively, the first, third, fifth and seventh RUs may be transmitted over the first and second transmitting antennas, and the second, fourth, sixth and eighth RUs may be transmitted over the third and fourth transmitting antennas, and the base station may have one pilot pattern or a plurality of orthogonal pilot patterns assigned to the mobile terminal. For example, the first and the third transmitting antennas share one pilot pattern, and the second and the fourth transmitting antennas share another pilot pattern. Other equivalents or obvious variants of these two examples may also achieve the same technical effect, and won't be further described.

In the embodiment where a plurality of pilot patterns are assigned to one mobile terminal by the base station, in order to implement channel estimation, the pilot patterns assigned to different mobile terminals by the base station are different. According to each pilot pattern known previously, the base station may parse out the pilot signals transmitted using different pilot patterns from the uplink signals transmitted by the plurality of mobile terminals, so as to perform channel estimation for each uplink channel, and parse the subsequent uplink signals more preciously. Basically, the introduction of the invention has no influence on the receiver of the uplink counterpart device such as base station. The uplink signal transmitted according to the present invention may be received and parsed using the existing receiver based on ML or MMSE.

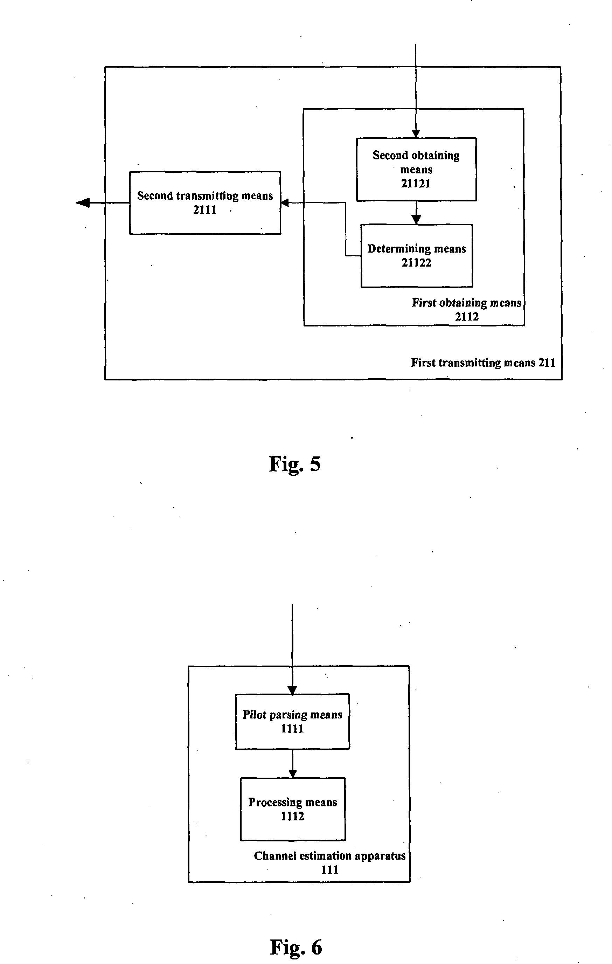

The invention is described above in the aspect of method. In the following it will be described in the aspect of apparatus. Fig. 5 shows a block diagram of a first transmitting device in a network device of a multi-carrier based wireless access network, for transmitting uplink data to access device side, according to one embodiment of the invention. Fig. 6 shows a block diagram of a channel estimation device in an uplink counterpart device of a network device of a wireless access network, according to one embodiment of the invention.

The first transmitting device 211 comprises a second transmitting means 2111 and a first obtaining means 2112. The first obtaining means 2112 comprises a second obtaining means 21121 and a determining means 21122. The channel estimation device 111 comprises a pilot parsing means 1111 and a processing means 1112. The following description is carried out referring to Fig. 5 and Fig. 6 in connection with Fig. 3a and 3b. The first transmitting means 211 is typically located in the mobile terminal 21, 22 as shown in Fig. 3a, and the channel estimation device 111 is typically located in the uplink counterpart device such as a base station. Taking the uplink communication between the mobile terminal 21 and the base station to which it belongs as an example:
According to a preferred embodiment, the first obtaining means 2112 at the mobile terminal 21 obtains the corresponding relationship between a plurality of transmitting antennas and the subcarriers determined according to the channel quality information, which may be cooperatively implemented by two sub-means thereof. Specifically for example, in the Time Division Duplex (TDD) mode, the receiving channel quality and the transmitting channel quality are the same within the channel related time, because the receiving and transmitting are of the same frequency but of different time. Therefore, the second obtaining means 21121 may obtain the quality related information of the uplink signal received by the base station and transmitted by the mobile terminal 21 using each RU, according to the downlink signal quality related information received at each RU. The determining means 21122 determines therefore the corresponding relationship between the subcarriers and the plurality of transmitting antennas. Specifically for example, the base station may indicate the quality related information of the uplink signal previous received from each RU of the mobile terminal 21 to the second obtaining means 21121, and then the determining means 21122 determines the corresponding relationship between the subcarriers and the plurality of transmitting antennas according to the indication information received by the second obtaining means 21121. Specifically for example, if the second transmitting means 2111 of the mobile terminal 21 uses the corresponding relationship of the subcarriers and the transmitting antennas shown in Fig. 3a, and the uplink signal quality related information from the base station indicates that, the quality of the signal transmitted over TX_21a is a few dB higher than that of the signal transmitted over TX_21b, the determining means 21122 at the mobile terminal 21 adjusts the distribution of the plurality of subcarriers on the two transmitting antennas. For example, the ratio of 1:1 (two antennas go halves in the total subcarrier) shown in Fig. 3a is adjusted to 2:1 or even higher. Optionally, the mobile terminal may also prestore a plurality of information indicating the different corresponding relationships between the subcarriers and the transmitting antennas, and properly selects therefrom according to the uplink signal quality related information.

According to a variant of the situation above, the base station instead of the mobile terminal 21 may determine the corresponding relationship between the subcarriers and the transmitting antennas TX_21a and TX_21b in the following time period, thus, the information transmitted to the mobile terminal 21 by the base station is the specific corresponding relationship between each subcarrier and the corresponding transmitting antenna; or the number of the available subcarriers on each antenna, while the determining means 21122 of the mobile terminal 21 may determine on its own which antenna use which subcarrier.

In this example, it can be seen that there are differences between the execution cycles of the first obtaining means 2112 and the second transmitting means 2111. If there is more uplink data, the second transmitting means 2111 is actually performing constantly, while the first obtaining means 2112 is performing preferably at a determined period. It should be understood by those skilled in the art, if the period is too long, the system may be unable to timely response to the sudden degradation of the channel etc., which leads to mass of data being transmitted over antenna with extremely bad channel conditions, therefore the base station is unable to receive properly. Likely, if the period is too short, the requirement to the processing ability of the mobile terminal is too high, which may therefore result in the increment of the feedback as it is preferably carried out based on the uplink signal quality related information.

It should be understood by those skilled in the art, the corresponding relationship between each subcarrier and the transmitting antennas may be statically configured, for example, subcarriers No. 0-5, No. 12-17 may be statically corresponding to TX_21a, while subcarriers No. 6-11, No. 18-23 may be statically corresponding to TX_21b. Thus, the first obtaining means 2112 may be omitted. Furthermore, the mobile terminal 21 may also prestore a plurality of information indicating the different corresponding relationships between the subcarriers and the transmitting antennas, and periodically switch the used corresponding relationship, in this case, the first obtaining means 2112 may also be omitted.

The QAM modulated data symbols, the pilot symbols generated by the pilot symbol generator are together modulated with the subcarrier, therefore the multi-path subcarrier modulated symbols are obtained. Wherein, since certain subcarrier is corresponding to certain specific transmitting antenna, date symbols or pilot symbols modulated by certain subcarrier are queued on the corresponding transmitting antenna. Thus, two paths of subcarrier modulated symbols are generated. It should be understood by those skilled in the art, the above subcarrier modulation may be implemented by the second transmitting means 2111, or be implemented by another means.

The second transmitting means 2111 transmits the above two paths of subcarrier modulated symbols over the corresponding transmitting antenna to the base station.

As shown in Fig. 3a, except for the idle subcarriers, each RU may carry 10 data symbols or pilot symbols, and in the above embodiment, the data symbols carried by the shown six RUs are different from each other. According to a variant of the embodiment, wherein, the data rate is half of that in the previous embodiment, namely, the data symbols carried by RU1 and RU2, by RU3 and RU4, by RU5 and RU6 are respectively the same, the remaining general data symbols are buffered temporarily for later transmission. Thus, same data symbols are transmitted over the two transmitting antennas of the mobile terminal 21, with the subcarrier used being different. Extra frequency diversity may be introduced, of course, the price of which is the decrease of data rate.

The procedure in the mobile terminal 22 shares the same principle with the mobile terminal 21, thus, no more details will be given here. However, preferably, the first pilot pattern used by the mobile terminal 21 is different from the second pilot pattern used by the mobile terminal 22. More preferably, the first pilot pattern and the second pilot pattern are orthogonal to each other.

In the present invention, preferably, each transmitting antenna transmits using full power. Thus, in comparison with the prior art shown in Fig. 1, the antenna transmitting power averaged to each subcarrier is higher, thus the advantage of transmitting power gain is obvious.

According to a different embodiment of the invention, under the permission of the conditions such as the equipment size etc., the mobile terminal may have more than two transmitting antennas, for example, four or even eight. Then, the implementation manner of the present invention is more flexible, for example, if one OFDM symbol comprises 8 RUs, while the mobile terminal has 4 antennas, then the first and the fifth RUs may be transmitted over the first transmitting antenna, and the second and the sixth RUs may be transmitted over the second transmitting antenna, and the third and the seventh RUs may be transmitted over the third transmitting antenna, and the fourth and the eighth RUs may be transmitted over the fourth transmitting antenna, and the base station may have only one pilot pattern assigned to the mobile terminal. Alternatively, the first, third, fifth and seventh RUs may be transmitted over the first and second transmitting antennas, and the second, fourth, sixth and eighth RUs may be transmitted over the third and fourth transmitting antennas, and the base station may have one pilot pattern or a plurality of orthogonal pilot patterns assigned to the mobile terminal. For example, the first and the third transmitting antennas share one pilot pattern, and the second and the fourth transmitting antennas share another pilot pattern. Other equivalents or obvious variants of these two examples may also achieve the same technical effect, and won't be further described.

In the embodiment where a plurality of pilot patterns are assigned to one mobile terminal by the base station, in order to implement channel estimation, the pilot patterns assigned to different mobile terminals by the base station are different. According to each pilot pattern known previously, the pilot paring means 1111 at the base station may parse out the pilot signals transmitted using different pilot patterns from the uplink signals transmitted by the plurality of mobile terminals, so that the processing means 1112 performs channel estimation for each uplink channel, and parses the subsequent uplink signals more preciously. Basically, the introduction of the invention has no influence on the receiver of the uplink counterpart device such as base station. The uplink signal transmitted according to the present invention may be received and parsed using the existing receiver based on ML or MMSE.

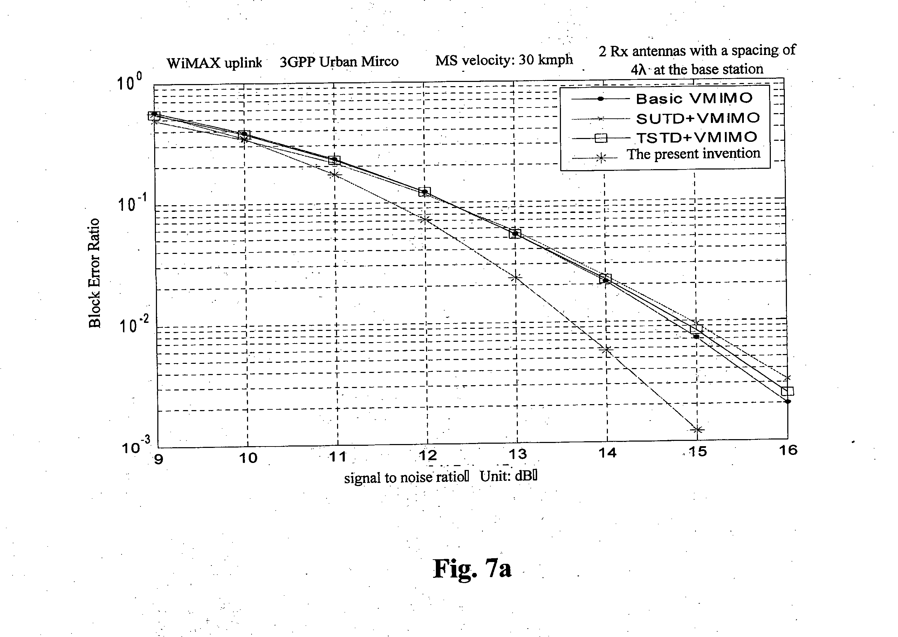

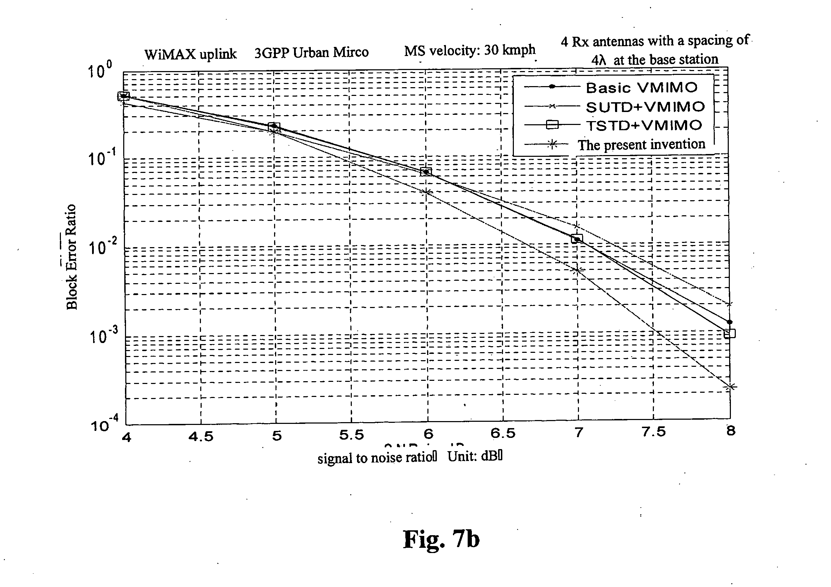

Fig. 7a and Fig. 7b shows a comparison between the simulation results of the present invention and the prior art. Table 1 shows the various conditions of the simulation. Four VMIMO technologies are compared in Fig. 7a, wherein the base station has two receiving antennas, while Fig. 7b compares these four VMIMO technologies under the condition that the base station has four receiving antennas. It can be clearly seen from Fig.7a and 7b, the curve of the Block Error Ratio (BLER) against the Signal to Noise Ratio (SNR) implemented by the solution provided in this invention is the steepest, which means extra diversity gain is implemented in this invention in comparison with the other solution. Under the consideration of the power gain of the transmitting antenna, besides the shown diversity gain, the present invention provides an extra gain of 3 dB in comparison with basic VMIMO and TSTD based MIMO.

**Table 1: Simulation conditions**

| Parameter | Assumption |
|---|---|
| OFDM parameter | Carrier frequency = 2.5 GHz |
| | FFT size= 1024; CP length = 128 samples WiMAX uplink, PUSC permutation |
| Channel model | 3GPP SCME - Urban Micro, 30 kmph |
| Channel coding | CTC, coding rate = 1/2 |
| Modulation scheme | 16QAM |
| Transmitting power of each MS | Total transmit power is the same for all the four schemes |
| Path loss offset between two MSs and BS | 0 |
| Antenna configuration | 2 or 4 Rx with antenna spacing of 4 λ at the BS side |
| | 2 Tx with antenna spacing of 0.5 λ at the MS side |
| Channel estimation | Realistic channel estimation |

Only a preferable embodiment of the present invention has been described above, however the scope of the present invention is not limited thereto. Alternations or replacements within the technical scope of the disclosure of the invention which easily occur to those skilled in the art should be covered in the scope of the invention. Thus, the scope of the present invention is defined by the appended claims.

## Claims

1. A method, in a network device (21) of a multi-carrier based wireless access network, for transmitting uplink data to access device side, wherein the network device (21) has a plurality of transmitting antennas (TX_21a, TX_21b), and the method comprises the following steps: m. transmitting (S213) multipath subcarrier modulated symbols via the plurality of transmitting antennas (TX_21a, TX_21b), wherein, subcarrier sets used by at least two transmitting antennas (TX_21a, TX_21b) are different, wherein before the step m, the method further comprises: a. obtaining (S211) a corresponding relationship between the plurality of transmitting antennas (TX 21a, TX 21b) and the multiple subcarriers determined according to information related to the quality of the uplink signal between the network device (21) and its uplink counterpart device; the step m comprising: - transmitting (S213) the multipath subcarrier modulated symbols via the plurality of transmitting antennas(TX 21a, TX 21b), based on the determined corresponding relationship between the plurality of transmitting antennas (TX 21a, TX 21b) and the multiple subcarriers.

2. A method according to claim 1, wherein at least two of the multipath subcarrier modulated symbols are different.

3. A method according to claim 1 or 2, wherein the step a further comprises: a1. obtaining the information related to the quality of the uplink signal from the uplink counterpart device of the network device (21), the information related to the quality of the uplink signal being for indicating the quality of the uplink signal transmitted by each transmitting antenna (TX_21a, TX_21b) of the network device (21) at the uplink counterpart device; a2. determining the corresponding relationship between the multiple subcarriers and the plurality of transmitting antennas (TX_21a, TX_21b), based on the information related to the quality of the uplink signal.

4. A method according to any of claims 1 to 3, wherein the wireless access network is based on orthogonal frequency division multiplexing, wherein subcarrier set used by each transmitting antenna (TX_21a, TX_21b) corresponds to at least one orthogonal frequency division multiplexing resource unit.

5. A method according to claim 4, wherein the subcarrier sets used by different transmitting antennas (TX_21a, TX_21b) correspond to multiple orthogonal frequency division multiplexing resource units that have intervals between each other in frequency domain.

6. A method according to any of claims 1 to 5, wherein at least two transmitting antennas (TX_21a, TX_21b) use same pilot pattern.

7. A first transmitting device (211), in a network device (21) of a multi-carrier based wireless access network, for transmitting uplink data to access device side, wherein, the network device (21) has a plurality of transmitting antennas (TX_21a, TX_21b), and the first transmitting device (211) comprises: a second transmitting means (2111), configured to transmit multipath subcarrier modulated symbols via the plurality of transmitting antennas (TX_21a, TX_21b), wherein, subcarrier sets used by at least two transmitting antennas (TX_21a, TX_21b) are different,.
wherein, the first transmitting device (211) further comprises: a first obtaining means (2112), configured to obtain a corresponding relationship between the plurality of transmitting antennas (TX_21a, TX_21b) and the multiple subcarriers determined according to an information related to the quality of the uplink signal between the network device (21) and its uplink counterpart device; the second transmitting means (2111) is further configured to: transmit the multi-path subcarrier modulated symbols via the plurality of transmitting antennas (TX_21a, TX_21b), based on the determined corresponding relationship between the plurality of transmitting antennas (TX_21a, TX_21b) and the multiple subcarriers.

8. A first transmitting device (211) according to claim 7, wherein, the first obtaining means (2112) further comprises: a second obtaining means (21121), configured to obtain the information related to the quality of the uplink signal from the uplink counterpart device of the network device (21), the information related to the quality of the uplink signal being for indicating the quality of the uplink signal transmitted by each transmitting antenna (TX_21a, TX_21b) of the network device (21) at the uplink counterpart device; a determining means (21122), configured to determine the corresponding relationship between the multiple subcarriers and the plurality of transmitting antennas (TX_21a, TX_21b), based on the information related to the quality of the uplink signal.

9. A network device (21) in a multi-carrier based wireless access network, wherein the network device (21) has plurality of transmitting antennas (TX_21a, TX_21b), and comprises the first transmitting device (211) according to any of claims 7 to 8.

## Patentansprüche

1. Verfahren in einer Netzwerkeinrichtung (21) eines drahtlosen Mehrträger-Zugangsnetzes zur Übertragung von Aufwärtsstreckendaten für den Zugang zur Einrichtungsseite, wobei die Netzwerkeinrichtung (21) eine Vielzahl von übertragenden Antennen (TX_21a, TX_21b) hat und das Verfahren die folgenden Schritte umfasst: m. Übertragen (S213) von hilfsträgermodulierten Mehrpfadsymbolen über die Vielzahl von übertragenden Antennen (TX_21a, TX_21b), wobei die von mindestens zwei übertragenden Antennen (TX_21a, TX_21b) verwendeten Gruppen von Hilfsträgern unterschiedlich sind und wobei vor Schritt m das Verfahren weiterhin umfasst: a. Abrufen (S211) einer entsprechenden Beziehung zwischen der Vielzahl übertragender Antennen (TX_21a, TX_21b) und den multiplen Hilfsträgern, die bestimmt wird auf der Grundlage von Informationen zur Qualität des Aufwärtsstreckensignals zwischen der Netzwerkeinrichtung (21) und dem ihr uplink zugewiesenen Gegenstück; wobei Schritt m umfasst: - Übertragen (S213) der hilfsträgermodulierten Mehrpfadsymbole über die Vielzahl von übertragenden Antennen (TX_21a, TX_21b) auf der Grundlage der ermittelten entsprechenden Beziehung zwischen der Vielzahl übertragender Antennen (TX_21a, TX_21b) und den multiplen Hilfsträgern.

2. Verfahren nach Anspruch 1, wobei mindestens zwei der hilfsträgermodulierten Mehrpfadsymbole unterschiedlich sind.

3. Verfahren nach Anspruch 1 oder 2, wobei der Schritt weiterhin umfasst: a1. Abrufen der Informationen zur Qualität des Aufwärtsstreckensignals vom uplink gelegenen Gegenstück der Netzwerkeinrichtung (21), wobei die Informationen zur Qualität des Aufwärtsstreckensignals dazu dienen, am uplink gelegenen Gegenstück die Qualität des Aufwärtsstreckensignals anzugeben, das von einer jeden der übertragenden Antennen (TX_21a, TX_21b) der Netzwerkeinrichtung (21) übertragen wird; a2. Bestimmen der entsprechenden Beziehung zwischen den multiplen Hilfsträgern und der Vielzahl übertragender Antennen (TX_21a, TX_21b) auf der Grundlage der Informationen zur Qualität des Aufwärtsstreckensignals.

4. Verfahren nach einem jeglichen der Ansprüche 1 bis 3, wobei das drahtlose Zugangsnetzwerk auf orthogonalem Frequenzmultiplexing beruht, wobei die von einer jeden übertragenden Antenne (TX_21a, TX_21b) verwendete Gruppe von Hilfsträgern mindestens einer Betriebseinheit für orthogonales Frequenzmultiplexing entspricht.

5. Verfahren nach Anspruch 4, wobei die von verschiedenen übertragenden Antennen (TX_21a, TX_21b) verwendeten Gruppen von Hilfsträgern multiplen Betriebseinheiten für orthogonales Frequenzmultiplexing entsprechen, zwischen denen Intervalle in der Frequenzdomäne bestehen.

6. Verfahren nach einem jeglichen der Ansprüche 1 bis 5, wobei mindestens zwei übertragende Antennen (TX_21a, TX_21b) dasselbe Pilotmuster verwenden.

7. Eine erste Übertragungseinrichtung (211) in einer Netzwerkeinrichtung (21) eines drahtlosen Mehrträger-Zugangsnetzes zur Übertragung von Aufwärtsstreckendaten für den Zugang zur Einrichtungsseite, wobei die Netzwerkeinrichtung (21) eine Vielzahl von übertragenden Antennen (TX_21a, TX_21b) hat und die erste Übertragungseinrichtung (211) Folgendes umfasst: eine zweite Übertragungseinrichtung (2111), die konfiguriert ist für die Übertragung von hilfsträgermodulierten Mehrpfadsymbolen über die Vielzahl übertragender Antennen (TX_21a, TX_21b), wobei die von mindestens zwei übertragenden Antennen (TX_21a, TX_21b) verwendeten Gruppen von Hilfsträgern unterschiedlich sind, wobei die erste Übertragungseinrichtung (211) weiterhin umfasst: ein erstes Abrufmittel (2112), konfiguriert für das Abrufen einer entsprechenden Beziehung zwischen der Vielzahl übertragender Antennen (TX_21a, TX_21b) und den multiplen Hilfsträgern, bestimmt gemäß einer Information zur Qualität des Aufwärtsstreckensignals zwischen der Netzwerkeinrichtung (21) und deren uplink gelegenem Gegenstück; dabei ist die zweite Übertragungseinrichtung (2111) weiterhin konfiguriert für: das Übertragen der hilfsträgermodulierten Mehrpfadsymbole über die Vielzahl von übertragenden Antennen (TX_21a, TX_21b) auf der Grundlage der bestimmten entsprechenden Beziehung zwischen der Vielzahl übertragender Antennen (TX_21a, TX_21b) und den multiplen Hilfsträgern.

8. Eine erste Übertragungseinrichtung (211) nach Anspruch 7, wobei das erste Abrufmittel (2112) weiterhin umfasst: ein zweites Abrufmittel (21121), konfiguriert für das Abrufen der Informationen zur Qualität des Aufwärtsstreckensignals vom uplink gelegenen Gegenstück der Netzwerkeinrichtung (21), wobei die Informationen zur Qualität des Aufwärtsstreckensignals dazu dienen, am uplink gelegenen Gegenstück die Qualität des Aufwärtsstreckensignals anzugeben, das von einer jeden der übertragenden Antennen (TX_21a, TX_21b) der Netzwerkeinrichtung (21) übertragen wird; ein Bestimmungsmittel (21122), konfiguriert für das Bestimmen der entsprechenden Beziehung zwischen den multiplen Hilfsträgern und der Vielzahl übertragender Antennen (TX_21a, TX_*21b*) auf der Grundlage der Informationen zur Qualität des Aufwärtsstreckensignals.

9. Eine Netzwerkeinrichtung (21) in einem drahtlosen Mehrträger-Zugangsnetz, wobei die Netzwerkeinrichtung (21) eine Vielzahl übertragender Antennen (TX_21a, TX_21b) hat und die erste Übertragungseinrichtung (211) nach einem jeglichen der Ansprüche 7 bis 8 umfasst.

## Revendications

1. Procédé, dans un dispositif de réseau (21) d'un réseau d'accès sans fil à porteuses multiples, pour transmettre des données de liaison montante vers le côté du dispositif d'accès, dans lequel le dispositif de réseau (21) présente une pluralité d'antennes de transmission (TX_21a, TX_21b), et le procédé comprend l'étape suivante : m. transmettre (S213) des symboles modulés de sous-porteuses à trajets multiples par l'intermédiaire de la pluralité d'antennes de transmission (TX_21a, TX_21b), dans lequel les ensembles de sous-porteuses utilisés par au moins deux antennes de transmission (TX_21a, TX_21b) sont différents, dans lequel avant l'étape m, le procédé comprend en outre l'étape suivante : a. obtenir (S211) une relation correspondante entre la pluralité d'antennes de transmission (TX_21a, TX_21b) et les sous-porteuses multiples déterminée conformément aux informations relatives à la qualité du signal de liaison montante entre le dispositif de réseau (21) et son dispositif de liaison montante homologue ; l'étape m comprenant l'étape suivante : - transmettre (S213) les symboles modulés de sous-porteuses à trajets multiples par l'intermédiaire de la pluralité d'antennes de transmission (TX_21a, TX_21b), sur la base de la relation correspondante déterminée entre la pluralité d'antennes de transmission (TX_21a, TX_21b) et les sous-porteuses multiples.

2. Procédé selon la revendication 1, dans lequel au moins deux des symboles modulés de sous-porteuses à trajets multiples sont différents.

3. Procédé selon la revendication 1 ou 2, dans lequel l'étape a comprend en outre les étapes suivantes : a1. obtenir les informations relatives à la qualité du signal de liaison montante à partir du dispositif de liaison montante homologue du dispositif de réseau (21), les informations relatives à la qualité du signal de liaison montante servant à indiquer la qualité du signal de liaison montante transmis par chaque antenne de transmission (TX_21a, TX_21b) du dispositif de réseau (21) au niveau du dispositif de liaison montante homologue ; a2. déterminer la relation correspondante entre les sous-porteuses multiples et la pluralité d'antennes de transmission (TX_21a, TX_21b), sur la base des informations relatives à la qualité du signal de liaison montante.

4. Procédé selon l'une quelconque des revendications 1 à 3, dans lequel le réseau d'accès sans fil est basé sur le multiplexage par répartition orthogonale de la fréquence, dans lequel l'ensemble de sous-porteuses utilisé par chaque antenne de transmission (TX_21a, TX_21b) correspond à au moins une unité de ressources à multiplexage par répartition orthogonale de la fréquence.

5. Procédé selon la revendication 4, dans lequel les ensembles de sous-porteuses utilisés par des antennes de transmission (TX_21a, TX_21b) différentes correspondent à de multiples unités de ressources à multiplexage par répartition orthogonale de la fréquence qui présentent des intervalles entre elles dans le domaine de fréquences.

6. Procédé selon l'une quelconque des revendications 1 à 5, dans lequel au moins deux antennes de transmission (TX_21a, TX_21b) utilisant le même modèle pilote.

7. Premier dispositif de transmission (211), dans un dispositif de réseau (21) d'un réseau d'accès sans fil à porteuses multiples, pour transmettre des données de liaison montante vers le côté du dispositif d'accès, dans lequel le dispositif de réseau (21) présente une pluralité d'antennes de transmission (TX_21a, TX_21b), et le premier dispositif de transmission (211) comprend: des deuxièmes moyens de transmission (2111), configurés pour transmettre des symboles modulés de sous-porteuses à trajets multiples par l'intermédiaire de la pluralité d'antennes de transmission (TX_21a, TX_21b), dans lequel, les ensembles de sous-porteuses utilisés par au moins deux antennes de transmission (TX_21a, TX_21b) sont différents, dans lequel, le premier dispositif de transmission (211) comprend en outre : des premiers moyens d'obtention (2112), configurés pour obtenir une relation correspondante entre la pluralité d'antennes de transmission (TX_21a, TX_21b) et les sous-porteuses multiples déterminée conformément aux informations relatives à la qualité du signal de liaison montante entre le dispositif de réseau (21) et son dispositif de liaison montante homologue ; les deuxièmes moyens de transmission (2111) sont en outre configurés pour: transmettre les symboles modulés de sous-porteuses à trajets multiples par l'intermédiaire de la pluralité d'antennes de transmission (TX_21a, TX_21b), sur la base de la relation correspondante déterminée entre la pluralité d'antennes de transmission (TX_21a, TX_21b) et les sous-porteuses multiples.

8. Premier dispositif de transmission (211) selon la revendication 7, dans lequel, les premiers moyens d'obtention (2112) comprennent en outre : des deuxièmes moyens d'obtention (21121), configurés pour obtenir les informations relatives à la qualité du signal de liaison montante à partir du dispositif de liaison montante homologue du dispositif de réseau (21), les informations relatives à la qualité du signal de liaison montante servant à indiquer la qualité du signal de liaison montante transmis par chaque antenne de transmission (TX_21a, TX_21b) du dispositif de réseau (21) au niveau du dispositif de liaison montante homologue ; des moyens de détermination (21122), configurés pour déterminer la relation correspondante entre les sous-porteuses multiples et la pluralité d'antennes de transmission (TX_21a, TX_21b), sur la base des informations relatives à la qualité du signal de liaison montante.

9. Dispositif de réseau (21) dans un réseau d'accès sans fil à porteuses multiples, dans lequel le dispositif de réseau (21) présente une pluralité d'antennes de transmission (TX_21a, TX_21b) et comprend le premier dispositif de transmission (211) selon l'une des revendications 7 et 8.
